# EUROPEAN PATENT SPECIFICATION

(11) **EP 2 016 491 B1**
(45) Date of publication and mention of the grant of the patent: **30.06.2010**
(21) Application number: 07755995.3
(22) Date of filing: 25.04.2007
(51) Int. Cl.: G06F 9/50

(54) **SYSTEM AND METHOD FOR SEPARATING MULTIPLE WORKLOADS PROCESSING IN A SINGLE COMPUTER OPERATING ENVIRONMENT**
SYSTEM UND VERFAHREN ZUM AUFTRENNEN EINER MEHRFACH-ARBEITSLASTENVERARBEITUNG IN EINER EINZELCOMPUTER-BETRIEBSUMGEBUNG
SYSTEME ET PROCEDE DE SEPARATION DE TRAITEMENT DE PLUSIEURS CHARGES DE TRAVAIL DANS UN ENVIRONNEMENT DE FONCTIONNEMENT A UN SEUL ORDINATEUR

(30) Priority: 27.04.2006 US 795460 P; 29.12.2006 US 647650
(43) Date of publication of application: 21.01.2009
(73) Proprietor: Unisys Corporation, Blue Bell, PA 19424-0001 (US)
(72) Inventor: THOMPSON, James, W., West Chester, PA 19382 (US); HOFFMAN, Philip, M., Oreland, PA 19075 (US); STELL, Jeffrey, A., Exton, PA 19341 (US); PARAGAS, Jessica, A., Springfield, PA 19064 (US); SCHATZ, Steven, D., Eagleville, PA 19403 (US); MARTSUN, Tatyana, Philadelphia, PA 19152 (US); MATYOK, Anthony, P., Springfield, PA 19064 (US); STRATTON, William, Malvern, PA 19355 (US); TROXELL, Eugene, W., King of Prussia, PA 19406 (US); LIERMANN, Robert, K., Downingtown, PA 19335 (US)
(74) Representative: Modiano, Micaela Nadia
(86) International application number: PCT/US2007/009995
(87) International publication number: WO 2007/127234

(56) References cited:
- US-A- 5 327 557
- LUNDBERG L: "Static process allocation using information about program behaviour" PROCEEDINGS OF THE ANNUAL HAWAII INTERNATIONAL CONFERENCE ON SYSTEM SCIENCES, vol. 1, 8 November 1991 (1991-11-08), pages 1-9, XP002226104

## Description

### FIELD OF THE INVENTION

The present invention relates generally to techniques for providing processing services within a multi-processor computing system, and, in particular, to techniques for providing an automated configuration of workload processing sets for tasks of multiple workload types in a multi-processor computing system.

### BACKGROUND OF THE INVENTION

Support for Java workloads on mainframe computer systems provides a means for customers to share data between workloads while providing the security and resiliency only present in large computer systems. To support multiple workloads, each workload must contend for the same processor resources.

On mainframe servers, execution of Java code streams tends to be very processor intensive. When contending with non-Java tasks for valuable processor resources, Java tasks tend to dominate the processors and "starve" non-Java tasks. Priority scheduling can alleviate part of the problem, but then Java tasks are lower priority and may be unable to acquire processor resources consistently. Furthermore, computer costs would go up because larger processing capacity would be required to compensate for the processor intensive Java workload.

### SUMMARY OF THE INVENTION

Problems in the prior art are addressed in accordance with the principles of the present invention by providing processing services within a multi-processor computing system including providing an automated configuration of workload processing sets for tasks of multiple workload types in a multi-processor computing system.

In one embodiment, the present invention is a computing system having multiple processors in which these processors are automatically configured to support a plurality of workload types may provide processing metering by workload types. The computing system includes one or more standard processor set executing processing tasks associated with a standard workload type, one or more particular processor sets executing processing tasks associated with a particular workload type, and a server control module for configuring the standard processor sets, configuring the particular processor standard workload type and configuring the particular processor sets; and assigning tasks to processor set based upon the workload type associated with newly created tasks. In such a system, a server control module provides a mechanism for automatically configuring processor sets for processing tasks of each workload type supported by the system. This various processor sets are uniquely configured to support tasks of any given workload type. Tasks from a particular workload type are assigned to execute on a processor configured to support that workload type. If no processor set for a given workload type is present in a system, a task of that workload type may also be performed on a standard processor.

In another embodiment, the present invention is a method for providing automated configuration of processor sets for tasks from a plurality of workload types within a multi-processor computing system. The method configures at least one processor set to operate as a standard processor set, configures at least one processor set to operate as a processor set associated with one of the plurality of workload types, assigns newly created tasks to one of the plurality of workload types using characteristics of the task, assigns all child tasks spawned from an existing task to the workload type associated with the existing task, runs all tasks of each of the plurality of workload types on a processor set associated with the task's workload type when such a processor set exists within the computing system, and runs all other tasks not running on a processor set associated with the task's workload type on the at least one standard processor set.

In yet another embodiment, the present invention is a data storage media containing computer readable data encoded with instructions that when executed in a computing system implements a method for providing automated configuration of processor sets for tasks from a plurality of workload types within a multi-processor computing system. The method configures at least one processor set to operate as a standard processor set, configures at least one processor set to operate as a processor set associated with one of the plurality of workload types, assigns newly created tasks to one of the plurality of workload types using characteristics of the task, assigns all child tasks spawned from an existing task to the workload type associated with the existing task, runs all tasks of each of the plurality of workload types on a processor set associated with the task's workload type when such a processor set exists within the computing system, and runs all other tasks not running on a processor set associated with the task's workload type on the at least one standard processor set.

### BRIEF DESCRIPTION OF THE DRAWINGS

Other aspects, features, and advantages of the present invention will become more fully apparent from the following detailed description, the appended claims, and the accompanying drawings in which like reference numerals identify similar or identical elements.
FIG. 1 illustrates an example multiple workload processing-based computing system according to an embodiment of the present invention;
FIG. 2 illustrates a general purpose computing system for implementing various embodiments of the present invention;
FIGS. 3a-3b illustrate example embodiments of a multi-processor-based processing system configured as various workload sets according to one embodiment of the present invention;
FIG. 4 illustrates an example of a Fixed Key Information;
FIG. 5 illustrates an example of a Variable Key Information including the format of variable data in the key;
FIG. 6 illustrates an example of a decoded key string according to the present invention;
FIG. 7 illustrates an example of Licensing Two Workloads - Standard and Java;
FIG. 8 illustrates a Server Control Data Memory Map according to one embodiment of the present invention; and
FIG. 9a and 9b illustrate processing time accumulators under changing processor configuration according to the present invention.
FIG. 10 illustrates a flowchart for an example method for implementing one embodiment of the present invention.

### DETAILED DESCRIPTION

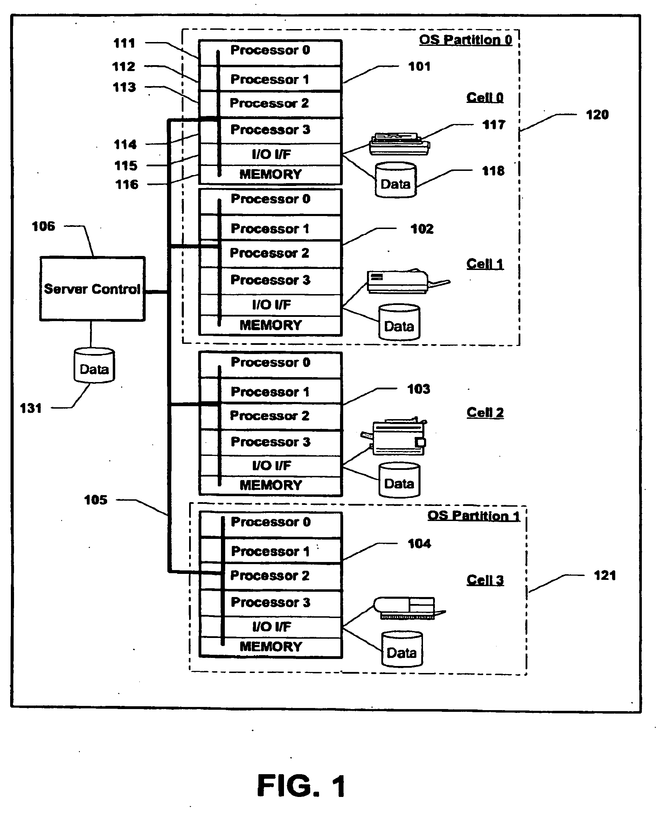

FIG. 1 illustrates an example multiple workload processing-based computing system according to an embodiment of the present invention. In this example, a system 100 is constructed from a set of cells 101-104 that are connected together via a high-speed data bus 105. Also connected to the bus 105 is a server control module 106 that provides supervisory control of the system. Server control module 106 maintains persistent data 131 regarding various configurations of system software that may be enabled.

Two different OS partitions 120-121 are present in the example configuration of FIG. 1. An OS partition is an instantiation of an operating system onto a computing system. The two partitions 120-121 may consist of two instantiations of the same OS. These two partitions 120-121 may also consist of an instantiation of two different operating systems. OS partition 0 120 operates using cells 0 and cell 1 101-102. OS partition 1 121 operates on cell 3 104. Cell 2 102 is currently not in use but may represent a spare cell available if any other cells fail.

Within each cell, a set of processor are present along with system memory and I/O interface modules. For example, cell 0 101 includes processor 0, processor 1, processor 2, and processor 3 111-114, I/O interface module 115, and memory module 116. Peripheral devices 117-118 are connected to I/O interface module 115 for use by any tasks executing within OS partition 0 120. All of the other cells within system 100 are similarly configured with multiple processors, system memory and peripheral devices. While the example shown in FIG. 1 illustrates cells 0 through cells 3 101-104 as being similar, one of ordinary skill in the art will recognize that each cell may be individually configured to provide a desired set of professing resources as needed.

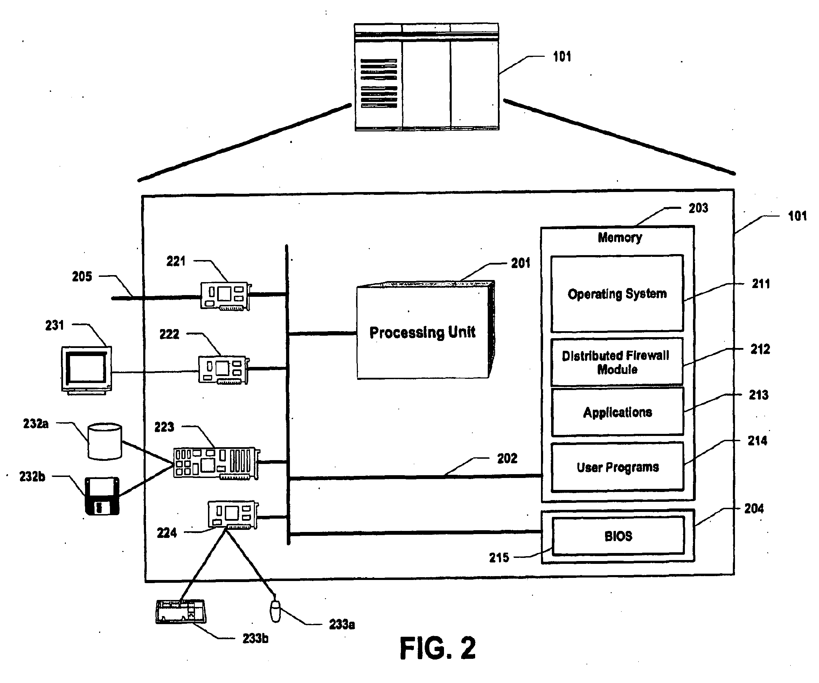

FIG. 2 illustrates a general purpose computing system for implementing various embodiments of the present invention. Those of ordinary skill in the art will appreciate that the computing system 300 may include many more components than those shown in FIG. 2. However, the components shown are sufficient to disclose an illustrative embodiment for practicing the present invention. As shown in FIG. 2, computing system 101 is connected to WAN/LAN 100, or other communications network, via network interface unit 221. Those of ordinary skill in the art will appreciate that network interface unit 221 includes the necessary circuitry for connecting computing system 101 to WAN/LAN 100, and is constructed for use with various communication protocols including the TCP/IP protocol. Typically, network interface unit 221 is a card contained within computing system 101.

The computing system 101 also includes processing unit 201, video display adapter 222, and a mass memory, all connected via bus 202. The mass memory generally includes RAM 203, ROM 204, and one or more permanent mass storage devices, such as hard disk drive 232a, a tape drive, CD-ROM/DVD-ROM drive, and/or a floppy disk drive 232b. The mass memory stores operating system 221 for controlling the operation of the programmable computing system 101. It will be appreciated that this component may comprise a general purpose server operating system as is known to those of ordinary skill in the art, such as UNIX, MAC OS X™, LINUX™, or Microsoft WINDOWS XP™. Basic input/output system ("BIOS") 215 is also provided for controlling the low-level operation of computing system 101.

The mass memory as described above illustrates another type of computer-readable media, namely computer storage media. Computer storage media may include volatile and nonvolatile, removable and non-removable media implemented in any method or technology for storage of information, such as computer readable instructions, data structures, program modules or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computing device.

The mass memory also stores program code and data for providing a host computing system. More specifically, the mass memory stores applications including host application program 213, user programs 214, and distributed firewall module 212.

The computing system 101 also comprises input/output interface 214 for communicating with external devices, such as a mouse 233a, keyboard 233b, scanner, or other input devices not shown in FIG. 2. Likewise, computing system 101 may further comprise additional mass storage facilities such as CD-ROM/DVD-ROM drive and hard disk drive 232a. Hard disk drive 232a is utilized by computing system 101 to store, among other things, application programs, databases, and program data used by various application programs.

The embodiments of the invention described herein are implemented as logical operations in a general purpose computing system. The logical operations are implemented (1) as a sequence of computer implemented steps or program modules running on a computer system and (2) as interconnected logic or hardware modules running within the computing system. This implementation is a matter of choice dependent on the performance requirements of the computing system implementing the invention. Accordingly, the logical operations making up the embodiments of the invention described herein are referred to as operations, steps, or modules. It will be recognized by one of ordinary skill in the art that these operations, steps, and modules may be implemented in software, in firmware, in special purpose digital logic, and any combination thereof without deviating from the spirit and scope of the present invention as recited within the claims attached hereto. This software, firmware, or similar sequence of computer instructions may be encoded and stored upon computer readable storage medium and may also be encoded within a carrier-wave signal for transmission between computing devices.

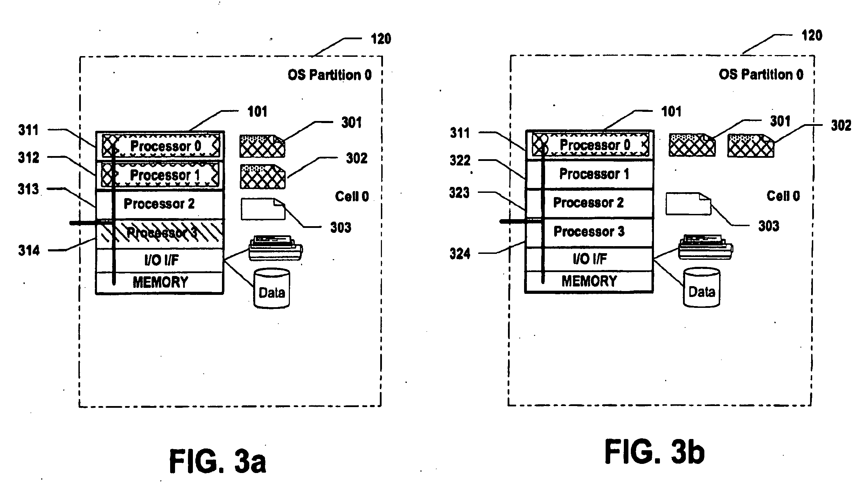

FIGS. 3a-3b illustrate example embodiments of a multi-processor-based processing system configured as various workload sets according to one embodiment of the present invention. In these two embodiments, OS partition 0 120 of FIG. 1 is shown using just cell 0 101. In the embodiment of FIG. 3a, processor 0 and processor 1 311-312 are shown operating as Java processors. Processor 2 313 is shown operating as a standard processor and processor 3 314 is not enabled for use and may act as a spare processor.

Java processors 311-312 in this example correspond to processors that are configured to efficiently perform Java tasks 301-302. These processors may be configured to utilize different microcode instructions applicable to Java tasks. These processors may possess customized hardware to support the Java tasks. Finally, these processors may be configured to operate at a particular performance level relative to a maximum possible processing throughput to adequately support Java tasks.

Standard processor 313 corresponds to a processor that is configured to support most other processing tasks 303 present within OS partition 0 120. This processor 313 may not necessarily possess customize microcode or specialized processing hardware. Additionally, processors may be configured to operate at a different performance level relative to a maximum possible processing throughput to provide cost effective processing. In some embodiments of multi-processor systems, users are billed for the system providing a pre-defined processing throughput. When a higher level of processor performance provided, a user may be charged a higher cost. As such, processing levels for the standard processors may be set accordingly.

When a task is executed within an OS partition 120, the task is assigned to a particular processor depending upon whether the tasks is a Java task 301 or a standard task 303. A child task 302 that is created by an existing task 301 is classified as a task of the same workload type. Java tasks 301-302 are performed by Java processors 311-312 when they are present within a configured system. If a Java processor is not included within a configured system, the Java tasks 301-302 are performed by a standard processor.

FIG. 3b illustrates the one cell example from FIG. 3a where cell 0 101 is configured to possess only one Java processor 311 and three standard processors 322-324. In this configuration, Java tasks 301-302 execute on Java processor 311 and standard task 303 may execute on any of the standard processors 322-324. The number of Java processors and the number of standard processors may be varied within various configurations for a OS partition 120 as required by a user to support a particular mix of tasks to be performed. When the mix of processing tasks are changed, a different configuration for the OS partition may be configured.

Throughout the entire description of various embodiments of the present invention, examples for two workload types, Java and standard tasks, are described. The choice of using two types of task for possible workload types has been made for illustrative purposes only and is not intended to limit the invention in anyway. Alternate workload sets in which processing tasks may be organized into a common set of tasks to be performed on its own processor may be used in place of Java processors and Java tasks as described herein. The characteristics for the alternate workload type processor may be configured as necessary to support the particular workload type and its corresponding tasks.

Similarly, systems may be configured to contain any number of workload types. In such an embodiment, processors from a multi-processor system of FIG. 1 may be assigned to each of the custom workload types (i.e. Java, image processing, encryption, speech processing, etc.) with tasks of each type of workload. One standard processor is typically included for use by general tasks including OS related tasks. Tasks from a given workload type will be assigned to a processor of its type, if one such a processor exists. If no processor of a particular workload type exists in the system, the task is performed by a standard processor.

This invention specifically describes mechanism used to set up a complete Java execution environment that runs concurrently with a standard execution environment within the same operating system instantiation. The concepts in this invention specifically address two workloads where each workload is associated with its own processor set. However these concepts can be extended much further by (1) increasing the number of workloads and (2) increasing the number of processor sets. The maximum number of active processor sets is only limited by the number of online processors. The maximum number of workloads is effective unlimited, but each processor set may be associated with more than one workload.

The invention changes processing of Java workloads and standard workloads using a single set of online processors in a partition by splitting the processors into two non-overlapping processor sets (Java processors and standard processors), and changing the processor scheduling to schedule Java tasks only on Java processors and everything else on standard processors. The invention encompasses many areas of the system including licensing (of Java and standard processors), workload performance redistribution (between partitions), automatic separation of processor sets, manual reconfiguration of processor sets, processor set process time reporting, mechanism to independently set processor microcode state, automatic processor failover recovery, automatic separation of workload differentiation, and workload-based processor scheduling. Furthermore, the invention requires only a change in the underlying infrastructure to enable the functionality. No recompilation of the Java code is required to use this invention.

In one embodiment, this feature is known as Secure Workload for Java. Secure Workload for Java is a concept in which multiple workloads can run in a single partition where workloads are automatically determined and routed to processors whose underlying architecture is optimized for the workload type executing on them. In this case, the Java workload is automatically separated from the non-Java workload. The Java workload executes on Java processors, whereas the non-Java workload executes on standard processors. This enables both workloads to coexist and execute in the same partition environment, but minimally impact each other.

Secure Workload for Java is a licensed entity that is enabled using a single processor performance licensing key. This key is similar to the performance keys used to license prior systems, in that the key licenses the processor performance of one or more partitions by the use of image enablers. Image enablers define the number of processors and the processor performance level that is licensed for each partition. The new processor performance licensing key takes this one step further by licensing up to two sets of processors for each partition; the standard image enablers are used to license standard processors, and additional information is included to license Java processors.

To effectively isolate the Java and non-Java workloads, the online processors on a Libra server partition are divided into two non-overlapping processor sets: (1) standard processors and (2) Java processors. Each set of processors is independently optimized by the OS modules for their respective workloads by changing the state of the processor microcode. The OS modules automatically determine the composition of the processor sets when the Secure Workload for Java licensing key is activated. However, customers are provided with operator commands that can be used to change this composition.

On systems that are licensed with Secure Workload for Java, OS modules automatically identify which applications are Java applications. The OS module that is responsible for scheduling processes for execution on a processor routes Java tasks to processors in the Java processor set and routes non-Java tasks to processors in the standard processor set. Thus, the entire Java workload fully executes on Java processors and the non-Java workload executes on standard processors.

A minimal requirement of Secure Workload for Java is that there must always be at least one processor that is defined to be in the standard processor set. Since there will always be some amount of system work that is non-Java, there must always be a processor environment for this work. Java processors are optimized to execute Java tasks more efficiently, and Java tasks automatically run on Java processors if at least one Java processor is online. However, Java task execution automatically switches to standard processors if the system administrator chooses to eliminate all of the Java processors, either by reconfiguration of processors or by elimination of Java licensing. When this occurs, Java tasks will continue to execute, but will contend with non-Java tasks for processor cycles on the standard processors.

Secure Workload for Java offers another unique workload management opportunity associated with tuning system performance. Secure Workload for Java includes automatic separation of processor sets, automatic separation of task types, and automatic scheduling of tasks to the appropriate processors. With Secure Workload for Java, OS modules keep separate processor utilization statistics for each processor set. Thus the system administrator can precisely determine standard processor utilization and Java processor utilization. This will become important in conjunction with other system performance management features to help the system administrator to deploy processor performance where it is needed.

Unlike prior art systems that provide a more limited Java execution environment, the Secure Workload for Java Platform provides an entire execution environment where Java applications completely execute on processors whose underlying architecture is optimized for Java applications. For example, Java applications that access a DMSII database continue to execute within the Java processor set, using an accelerated level of performance reserved for Java processors. Java application database access on other systems results in the request being sent to a "general purpose" processor to perform the access. Thus only a portion of the Java application is eligible to execute on the competitor's Java processors.

The following are new features of this invention: This invention provides a means to license multiple workloads in a single partition. This invention provides a means to license a system consisting of multiple partitions, each of which may license multiple workloads. This invention provides a means to redistribute licensed performance for multiple workloads between partitions. This invention provides a means to automatically separate online processors into two processor sets in a single partition. This invention provides a means to independently set the performance characteristics of each processor set. This invention provides a means to manually reconfigure processors within the respective processor sets. This invention provides a means to mark tasks that identified as Java tasks or standard tasks. This invention provides a means to schedule tasks identified as either Java or standard onto the appropriate processor set. This invention provides a means to separate CPU statistics by processor set so that system administrators can monitor overall utilization of each set for the purpose of performance management. This invention provides a means to formalize CPU time statistics for all tasks so that accumulated CPU statistics can be compared meaningfully. This invention provides a means to maintain the processor set performance as part of automatic processor failover recovery.

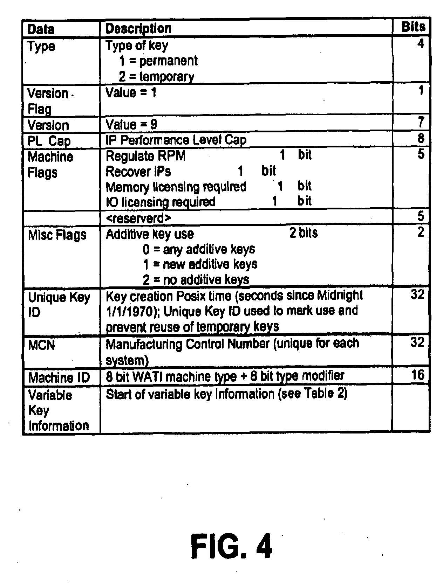

**Workload-Based Licensing - Standard Performance and Optional Java Processors** The Java processor set capability on capacity on demand (CoD) systems is enabled using a new key format that supports additional optional licensing of the Java processors along with the standard workload image performance. These keys use a version 9 key structure where words 1 through 4 contain the fixed information for the key as shown in FIG. 4.

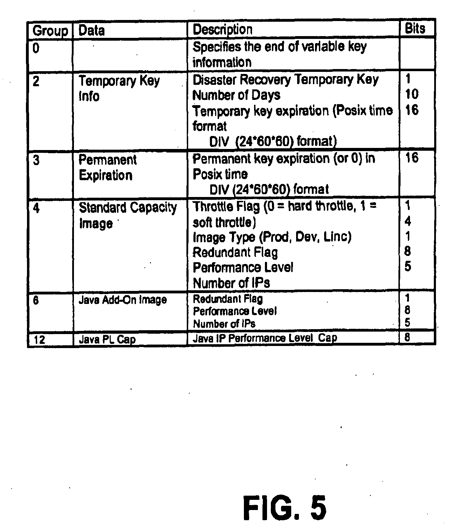

Following the fixed information in the key is variable key portion. The variable key information is always in a format that consists of 5 bit group identifier followed by the specific group information. The "Variable Key Information" table in FIG. 5 displays the groups and the structures for each group. The "Group" column shown is the group identifier that is stored in the first five bits of each group section. Multiple images are signified simply by creation of multiple image groups. The value 0 indicates there are no more groups to process.

The standard CoD with Java key is responsible for licensing multiple workloads for a partitioned computer system. The key associates specific workload licenses with a specific system. The system is uniquely identified in the key using (1) the machine ID (the type of computer system this is going on), and (2) the system MCN (a unique serial number imbedded in the system). The key licenses one or more partition images, each of which contains a mandatory standard component which includes the number of standard IPs, the performance level of those IPs, the IP configuration type (redundant or non-redundant), and an optional Java image component where the number of Java IPs is specified.

CoD keys are system-wide in scope. The keys themselves identify a specific system upon which the keys can be installed. After installation on the target host system, only one processor performance key can be active at any instance. Each active partition will be associated with an image defined in the key, and that image may contain an optional Java workload component. The sum of the image resources used by each partition must always be less than or equal to the total image resources licensed in the key. Thus if the standard CoD with Java key contains two images each of which licenses 3 Java processors, system software will ensure that no more that 2 * 3 or 6 Java processors will ever be online across all partitions.

In the key creation process, once the data for the key parameters are fully determined and the end of the key is signaled, the binary data is encrypted by the key encryption program. The key encryption program generates a key that consists of a string that begins with "EP1-" followed by 52 apparently random characters.

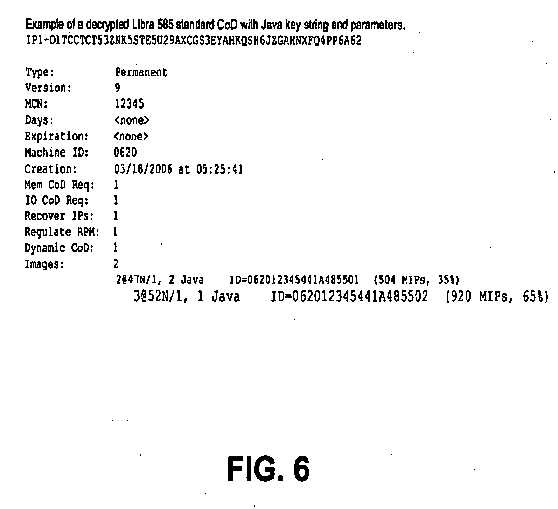

FIG. 6 illustrates output from the key generator program. Notice both the raw encrypted and the associated decrypted data are displayed. The standard CoD with Java key must be installed on a system in a manner that the key itself is visible to all partitions on the system. Furthermore, resources used in the key must also be visible. Thus for any given key that licenses one or more partitions, each partition is composed of a standard workload performance component (i.e., 'n' MIPS) and a Java workload component (i.e., 'm' Java processors), it is possible to determine the total licensed processing power of the entire system simply by summing each of the partitions' standard components and Java components.

Using the key example in Figure 6, the system is licensed for 504 MIPs + 920 for a total of 1424 MIPs for the standard workload and 2 Java CPUs + 1 Java CPUs for a total of 3 Java CPUs for the Java workload. On one possible system, users may chose to move performance resources between multiple partitions up to the respective limits. Simple operator commands allow for (1) displaying the current license state - IK IPSHOW ACTIVE, (2) changing the overall percentage of total licensed standard performance capacity for a partition - IK IPLIMIT <n>%, and (3) changing the overall number of online Java processors - IK IPJAVA ± <CPU_id> or IK IPJAVA - <CPU_id>.

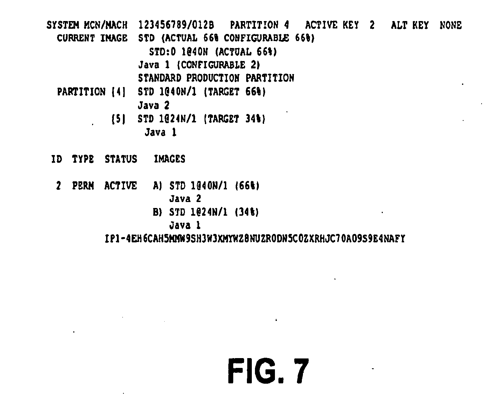

FIG. 7 displays the current licensing state on a computing system produced by a IK IPSHOW ALL operator command. In this example partition number 4 is configured with 1 Java processor running at the optimized Java performance level and 1 standard processor running at a level of performance level 40 - see "CURRENT IMAGE". A system-wide view of the images that are in use by each partition is also displayed. In this example the key licenses two partition images each of which consists of a standard performance rating component (STD rating) and a Java processor count component. The active key status, key licensing information and key string itself are also displayed.

### Low Level Processor Performance Control

On one possible embodiment of the present invention, each processor set is capable of running at a different level of performance. The performance functionality enabled for Java processors provides Java-optimized performance that is not available even for Java tasks that run on standard native levels of performance. One of the low-level control mechanisms that must be in place is setting the performance characteristics of each online processor. As part of processor set licensing, system software determines which processors are standard processors and which are Java processors. Based upon workload characteristics licensed in the key, system software can determine the level of performance that each processor should be set to.

There are many ways in which the individual processor performance characteristics can be conveyed to the processors. One way is for system software to simply write the processor state for each processor. Some embodiments of computing systems have such an instruction in the processor instruction set - WIPS or write internal processor state. For example if CPUs 0, 1, and 2 are standard processors that are licensed to provide 600 MIPs, and 600 MIPs is achievable on 3 processors that are 50% available, then a WIPS operation can be performed on each of the processors with a parameter value of 50 (indicating 50%). Similarly if CPU 3 is a Java processor, then a WIPS operation can be performed on that processor with a parameter that indicates Java enabled functionality. Actual mechanisms for setting processor performance characteristics are platform specific, and thus are likely to vary greatly from one system to another.

### System-Wide Key Storage and Partition Licensing Parameters

To achieve this level of CPU workload configuration flexibility, one must have an underlying data structure that is global in scope such that all of the licensing information is visible to every partition, and each partition is capable of dynamically changing its performance characteristics. Each partition must be capable of updating this structure independently, implying that some sort of locking protocol must be enabled.

A central maintenance entity called Server Control provides such a mechanism. Server Control exists to provide many system functions and partition related functions. For example each OS partition is started and stopped using Server Control interfaces. Server Control has a scope that is visible to each of the OS partitions, and as such is the logical place to locate the infrastructure that is used to communicate licensing information to each of the partitions. In addition to communicating licensing information, Server Control also provides identification information that can be used to uniquely identify each system and a common clock that can be used to synchronize licensing on each of the partitions.

General Requirements for Server Control require the return a means to identify the system as a whole; return the same identity information to each MCP instantiation; and serial numbers for all cells are returned in CoD licensing data on a LOCK operation. Server control also provides system-wide visible CoD licensing data structure. The structure is divided into two regions. A persistent CoD data contains installed keys and system-wide key activation information. A partition instantiation CoD data (supports 8 physical partitions) contains partition utilization information for each running partition.

Server control provides a system-wide CoD clock used with the CoD licensing data structure that has a granularity of 1 second. This clock is returned on a LOCK operation in the command/result communication area. Finally server control provided a means to identify the partition ID and a physical partition ID is identified in the halt/load parameters.

The Server Control CoD data structure is a high-memory structure that is initialized by Server Control when the partition is started. Once running, a secure performance licensing library is responsible for performing dynamic licensing operations by making changes to this data. To make changes to the Server Control data structure, an OS COMLINK communication interface is used. This communication interface is simply a message passing interface where the OS modules perform either a LOCK (& READ) function to read the contents of the Server Control data structure or a WRITE (& UNLOCK) function to unlock and/or update the Server Control data structure.

### Server Control Functions

The high memory CoD data structure is used for communication between OS tasks and the Server Control. The shared portion of the high memory CoD data structure consists of (1) a four-word command/result communication area concatenated to (2) the Server Control CoD data structure. Some references to the CoD data structure in this section are more fully described in the section Server Control CoD Data Structure.

Tables 1 and 2 illustrate the functions required to access central Server Control CoD data from each partition. These functions include locking, reading, and writing the data.

**Table 1. Format of a LOCK function.**

| Lock (Address=x0000, Length) | | | | |
|---|---|---|---|---|
| **Input** | **Output** | | | |
| A[0] = 3 (lock) | A[1] = 0 (success) or 1 (failure) | | | |
| A[2] = x0000 | A[2] = Server Control timestamp | | | |
| A[3] = length | A[4+x0000] = lock partition ID (CoD data word 0) | | | |
| | A[4+x0001] | = | partition checkin | (CoD data word 1) |
| | A[4+x0002] | = | update physical | partition info |
| | | [27:04] updating partition type | | |
| | | | SC | = 0 |
| | | | Native MCP | = 1 |
| | | | Intel | = 3 |
| | | [23:24] update counter | | |
| | A[4+x0003] = update timestamp | | | |
| | A[4+x0004] = root link | | | |
| | | [31:16] number of links | | |
| | | [15:16] index of first link | | |
| | A[4+x0005] = physical cell serial number link | | | |
| | | [31:16] number of physical cells | | |
| | | [15:16] index of first serial number | | |
| | A[4+x0006] = start of linked data | | | |
| | Physical cell serial number list | | | |
| | After cell serial number list, the remainder of the data is the Server Control persistent CoD data and the partition instantiation CoD data | | | |

System software uses LOCK to lock & read the entire CoD data structure.

**Table 2 - Format of a WRITE function.**

| Write (Address=x0000, Length) | |
|---|---|
| **Input** | **Output** |
| A[0] = 2 (write) | A[1] = 0 (success) or 1 (failure) |
| A[2] = Server Control CoD data address | |
| A[3] = Server Control CoD data length | |
| A[4+x0000] = Server Control CoD data for length | |

System software uses WRITE from address x0000 for a length of 2 (unlock only) or the entire length of the CoD data (write & unlock - used when updating CoD licensing data).

The licensing state of each partition is updated periodically, for example, once every minute. The access is essentially a polling interface where each partition retrieves the CoD data, checks for dynamic performance licensing state changes (key expiration, key changed, performance characteristics of other partitions changed, etc.), and validates the licensing characteristics of the current partition in the context of what other partitions are using at that moment. The validation is performed to ensure that the system is never running in an over-licensed state where the sum of the performance characteristics of each partition exceeds the total licensed in the key.

Access to the CoD data is protected by a locking mechanism that prevents licensing ambiguities that could otherwise occur. The OS modules control the licensing information maintained in the CoD data structure, and Server Control does not know the format of the data. In general Server Control only knows general control information that includes locking protocol, the central clock, system identification cell serial numbers, what kind of partition is instantiated for every partition ID. The general protocol for accessing the central CoD data structure from each partition is LOCK - READ - <make updates to the CoD data> - WRITE - UNLOCK. However the LOCK - READ functionality is collapsed into a single LOCK operation that contains an imbedded READ operation. Similarly the WRITE - UNLOCK functionality is collapsed into a single WRITE operation where one of the words written is the UNLOCK value:

Table 1 illustrates the format of the lock operation. This operation includes an imbedded read operation that returns the entire CoD data structure to the operating system. The LOCK operation forces a synchronization of the partition instantiation data between partitions. If Server Control detects that any partition is no longer running, Server Control will clear the partition instantiation data for that partition ID. This indicates that resources used by that partition are available for redistribution.

In addition to the CoD persistence licensing data and the partition instantiation data, the LOCK operation returns the current timestamp using a central clock. Thus each partition that accesses this data will have synchronized timestamps. The LOCK operation also returns a list of serial numbers for each cell on the system. On a system where components are hot-swappable, this list may change from one LOCK operation to the next. This data is mainly used for system identification purposes. Finally when the LOCK can be obtained, the imbedded READ functionality returns updated CoD licensing information that includes the updated CoD persistence and partition instantiation information.

Table 2 illustrates the format of the write operation. This operation includes imbedded data that unlocks the CoD data structure. If the operation is a simple UNLOCK operation where no data has been updated, the data length specified in the command area indicates that only the locking word updated with the UNLOCK value should be written. The operation can be used to transfer updated CoD information to Server Control by changing the data length specified in the command area to indicate the entire structure should be written with the locking word updated to the UNLOCK value.

### Server Control Functionality

Allocate disk file that can store 49,152 48-bit words. On initial allocation, clear entire buffer and set Locking Word (address x0000) to unlocked value (xFFFFFFFF). Read file on subsequent allocations.

Upon performing a LOCK operation, LOCK message is successful if Locking word (address x0000) is locked for some partition. LOCK is successfully acquired if LOCK message is successful and Locking Word (address x0000) is my partition ID. The following preconditions are used to acquire the lock: The previous value of the Locking Word is the unlocked value (xFFFFFFFF), or The partition ID specified in the Locking Word is stopped.

Upon performing a LOCK operation that successfully acquires a lock for my partition ID, build a list of physical cell serial numbers. The link to the cell serial numbers is found using the value of the index field found at the Root Link (address x0004). Cells that do not exist will have a serial number of x00000000. Cells that exist but cannot be read will have a serial number of xFFFFFFFF.

Upon performing a LOCK operation that successfully acquires a lock for my partition ID, check the partition state for every active partition. Loop through all Active Partition Data Regions (address x4000 + Partition ID * x1000 for x1000 words). If the associated Partition ID is stopped and the first word in the associated Active Partition Data Region (address x4000 + Partition ID * x1000) is not 0, clear all x1000 words. If the associated Partition ID is running and the first word in the associated Active Partition Data Region (address x4000 + Partition ID * x1000) is not 0, and the value at that word does not correspond to the running partition type, clear all x1000 words. Values associated with partition types are: Native MCP= 1 and Intel= 3. If any physical or virtual partition information is changed by Server Control, set the Partition Update Info (address x0002) as follows: [27:04] := x0 (Server Control type); Increment the value in [23:24]; If any physical or virtual partition information is changed by Server Control, set the Partition Update Timestamp (address x0003) to the current Posix time. At the end of the lock operation, message word 2 should be set to the current Posix time. Partition Update Info (address x0002) and Partition Update Timestamp (address x0003) are checked by system software as part of the LOCK operation. Changes in these 2 words indicate that system software should process all of the persistence and active partition data to synchronize Server Control data in the host.

Upon starting a partition, Server Control will initialize the high memory structure with the current state of the CoD licensing information (i.e., the data is equivalent to what system software would see by performing a LOCK [& read] operation followed by a WRITE [& unlock] operation).

### Server Control CoD Data Structure

The Server Control CoD data structure is the portion of the high memory CoD data structure that is used to convey system-wide licensing state including license sharing information for every active partition. The data itself is essentially an inter-partition communication area with special Server Control functionality that communicates active partition state information. This functionality makes it possible for complete OS-based license maintenance where Server Control does not have to make decisions on what constitutes valid licensing on each of the partition types. Furthermore if an external system had the ability to manipulate this Server Control CoD data structure (e.g., a PC configured as a central utilization sentinel), then all CoD and metering licensing could be controlled from a single point.

From the perspective of individual partitions, this structure is a window into a system-wide view of the current licensing state. To maintain this view, two mechanisms are used. (1) When the partition is started, Server Control both allocates and initializes this structure with current licensing information. (2) Every minute, system software then updates this data so that the partition has a view of up-to-date CoD licensing and utilization. Each active partition in the system also is updating this structure with its licensing state, so every partition has visibility into how system-wide licensing is allocated across active partitions. Server Control returns the partition state for each active partition so that performance resources allocated to a previously active partition are available for reallocation.

This structure is maintained by Server Control and contains CoD locking information (which partition is currently using the CoD data), CoD update information (when the last update was made), persistent CoD data (CoD keys, system-wide active licensing information, and expired/used temporary key information), active partition CoD information.

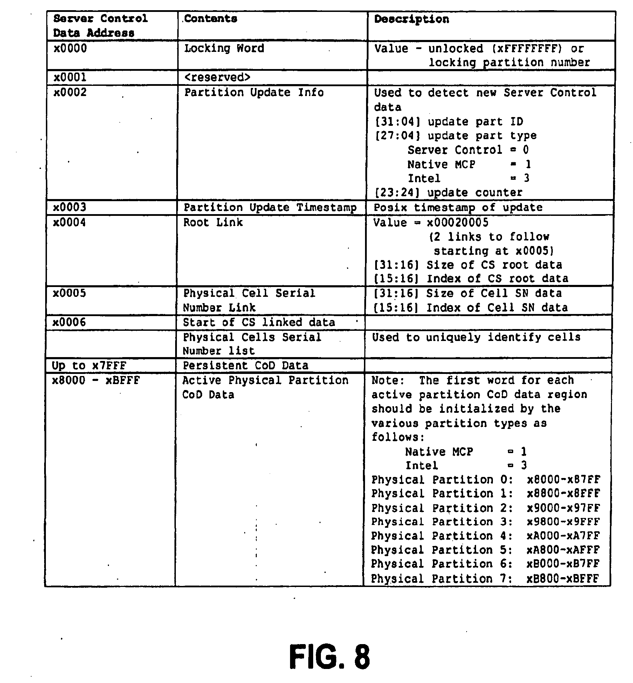

FIG. 8 illustrates the layout of the memory map for the Libra 680 Server Control CoD data structure. This structure is 49,152 words long and consists of 32,768 words of CoD persistence and 8 partition instantiation regions where each region is 2,048 words long. From the perspective of Server Control, the format of the actual CoD licensing data (installed keys, active key information, instantiated partition licensing information, etc.) is not known. Server Control only understands simple control and identification mechanisms. The format of the CoD licensing data is only known to system software and is fully under the control of all OS partitions that participate in the licensing.

### Dynamic Performance Redistribution

Dynamic performance redistribution allows customers to dynamically transfer processor performance among partitions of a system having the same workload type. The image enabler in the key licenses performance characteristics for all partitions. The image enabler consists of a standard workload component and an optional Java processor count. Using the licensing example in FIG. 6, the first image enabler (2@47N/1, 2 Java), consists of a standard workload that represents 504 MIPs of performance (enabled with 2 processors running at performance level 47). Also 2 Java processors are licensed. On a running partition, the current licensing state can be displayed using the IK IPSHOW ACTIVE operator command.

Dynamic performance redistribution is accomplished in two forms, depending upon whether the redistribution is for standard processing or Java processing. Standard IP performance is associated with standard images (e.g., 2@47N). Redistribution of standard IP performance allows for movement of performance associated with that image. System software adjusts the actual performance level of each processor combined with the actual processor configuration to match the desired level of performance. Java IP performance is reflected by the number of licensed Java processors. Redistribution of Java IP performance is accomplished only at the Java processor level (i.e., licenses for whole Java IPs can be moved between partitions).

The performance licensing characteristics of the system are maintained in the Server Control CoD data structure. All CoD keys and system-wide key activation information (i.e., indication of which key is active) are stored in the persistence data. The current performance characteristics for any running partition are saved in the Server Control CoD data structure in the partition instantiation data. This allows other partitions to determine what performance resources are in use, and thus what are available for the local partition. Using FIG. 8's Server Control CoD Memory Map, if partition 1 is licensed to run with 400 MIPs plus 3 Java processors, then the partition instantiation data region for partition 1 starting at index x8800 would be set to A series partition (offset 0, value=1), followed by the value 400 (indicating the partition is licensed to run with 400 MIPs). This is followed by another word that specifies the total number or Java processors online.

Every minute, each partition is updating its own current performance characteristics in the partition instantiation data. The partition instantiation data for all partitions is visible to every partition. Thus every partition is aware of the performance that is actually allocated for other partition. Each partition can then validate their own current performance characteristics in light of that used by other partitions to ensure that the total performance licensed by each partition does not exceed the total performance licensed in the key. If a running partition determines that other partitions are already using all or most of the performance licensed in the key, then that partition voluntarily reduces its performance license targets to a level that preserves the performance balance. If no remaining performance resources are available, that partition gives up its performance license targets and becomes unlicensed. An unlicensed partition continues to run, but runs so slowly that no meaningful work can be accomplished. This gives operators the chance to correct the partition performance balance without stopping a system.

### Automatic Allocation of Standard and Java Processors

When a CoD key that contains one or more partition image enablers is initially activated, each partition will automatically select one of the image enablers defined in the key as its active image. Using the CoD key example in FIG. 6, two partition image enablers are defined:
- 2@47N/1 (504 MIPs), 2 Java processors
- 3@52N/1 (920 MIPs), 1 Java processor

When that key is initially activated, the activating partition will automatically select one of the partition images. Within one minute, another partition will "discover" that a new key is active and will automatically select the remaining partition image.

Upon initial image activation, the following sequence is followed for assigning processors to sets: One processor is assigned to the standard processor set; if any unassigned online processors remain, Java processors are assigned up to the licensed number of Java processors; and any remaining unassigned online processors are assigned to the standard processor set.

Notice the count of standard processors is not limited to the licensed value. If the count differs from the licensed value, then automatic performance regulation goes into effect and the operating system attempts to maintain the licensed level of performance by adjusting the performance level of the processors. Table 3 illustrates the relationship between online processors and how processor sets are automatically allocated.

**Table 3 - Automatic Allocation of Processor Sets**

| **Licensed Partition Image** | | | **Actual Partition Image** | |
|---|---|---|---|---|
| Standard | Java | Online Processors | Standard | Java |
| 3@53N (920 MIPs) | 1 | 1 | 1@S7N (387 MIPs, 42%) | 0 |
| 3@53N (920 MIPs) | 1 | 2 | 1@57N (387 MIPs, 42%) | 1 |
| 3@53N (920 MIPs) | 1 | 3 | 2@57N (758 MIPs, 82%) | 1 |
| 3@53N (920 MIPs) | 1 | 4 | 3@53N (920 MIPs, 100%) | 1 |
| 3@53N (920 MIPs) | 1 | 5 | 4@47N (920 MIPs, 100%) | 1 |

### Means to Change the Composition of Processor Sets

Customers are provided with operator interfaces that allow overriding automatically configured processor sets. The operator command IK IPSET JAVA + <CPU identified is used to assign a standard processor to the Java processor set. Sufficient Java processor licensing resources must be available before a Java processor can be assigned. The operator command IK IPSET JAVA - <CPU identifier> is used to release a Java processor back to the standard processor set.

### Java Thread Instantiation and Identification

As implemented on possible embodiments of the present invention, Java Virtual Machine threads are instantiated as individual stacks. When the stack is being initiated, it is known that the environment is within the Java Virtual Machine. The stack is then marked as a Java stack. Subsequent offspring stacks inherit the Java stack characteristic.

### Workload Based Processor Scheduling

Every operating system must schedule tasks onto processors. Scheduling is typically priority-based and is accomplished using some type of queuing mechanism. One queuing mechanism is a single ready queue where all tasks wait for the next available processor. When the next available processor goes idle, the ready queue is searched, and the highest priority task is selected for execution.

Another queuing mechanism is one where there is a ready queue for every processor. When a processor goes idle, its ready queue is searched and the highest priority task is selected for execution. However this can lead to unbalanced utilization of processors unless processor intensive tasks can move to other processors.

The processor scheduling chosen for standard CoD licensing uses a workload based queuing where there is a ready queue for each workload type: the standard workload processor schedule queue and the Java workload processor schedule queue. Using the two queues, there is no scheduling contention between the two workloads, and the work tends to be evenly distributed across the entire processor set.

### Separate CPU Time Statistics

Previously, Java workloads and non-Java workloads ran on processors where the workloads were not differentiated. Operator interfaces and programmatic interfaces that return system-wide processor utilization statistics reflect overall system utilization. Operator interfaces that display utilization information typically return how busy processors were within some recent interval (i.e., prior 10 seconds), whereas programmatic interfaces tend to return processor times relative to when the system was loaded. Thus programmatic interfaces return processor times that are non-decreasing.

Typical system-wide processor time statistics that are returned include such items as task, IO, process switch, idle, etc. Various embodiments of computing systems according to the present invention accumulate processor time statistics for the processor time items listed below in Table 4.

**Table 4 - Processor Times collected as part of system performance statistics**

| **Task Type** | **Task** |
|---|---|
| Task Times | INITIAL PBIT |
| | OTHER PBIT |
| | USER STACK |
| | MCPSTACK |
| System Overhead | SEARCH LEAD |
| | SEARCH FOLLOW |
| | LISTEN |
| | IO FINISH |
| | PROCESS SWITCH |
| Idle Times | TRUE IDLE |
| | FALSE IDLE |

Portrayal of meaningful CPU time statistics on a static system where the processors never change processor sets is simple. A simple mechanism of underlying processor time accumulators are associated with each processor, and system-wide time statistics are available simply by summing all of the like accumulators for each processor.

The mechanism becomes more complicated with the introduction of multiple processor sets. With this implementation, individual processors will be assigned to a specific processor set. It is also possible for individual processors to move from one processor set to another because of manual processor reconfiguration changes or key reconfiguration changes. This ability to change the processor set of a processor could lead to inconsistencies in system-wide utilization statistics if a single set of accumulators per processor is used. To prevent such inconsistencies, a new counter structure is created to store accumulated processor times by processor set when a processor's processor set changes.

Processor times will continue to be gathered in with one set of accumulators per processor. In the case of OS tasks, the accumulators will gather the CPU times for INITIAL PBIT, OTHER PBIT, USER STACK, MCP STACK, SEARCH LEAD, SEARCH FOLLOW, LISTEN, IO FINISH, PROCESS WITCH, TRUE IDLE, and FALSE IDLE. In addition there will be a separate special workload set of accumulators for standard workload and Java workload, each of which will accumulate CPU times for the 11 listed items. CPU times are gathered in real time, and locking is not required because there is a set of accumulators for each processor. When a processor transitions from one set to another, the CPU times accumulated for that processor are transferred into the special workload set of accumulators, and the CPU times for that processor are reset to 0. The net effect of this is that the total CPU times for any workload is non-decreasing.

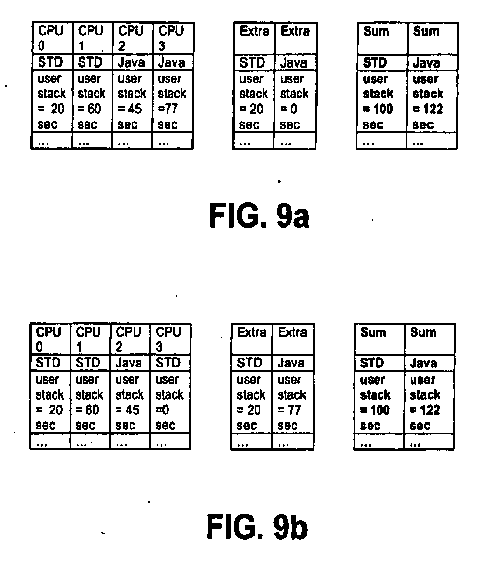

FIG. 9a illustrates using a single set of CPU time accumulators per processor plus an extra set of CPU time accumulators per workload. Note, only one time accumulator is shown and "..." indicates the remaining time accumulators. FIG. 9b illustrates changing CPU 3 from the Java processor set to the standard processor set. To do so, all of the prior user stack times for CPU 3 are moved into the Extra Java user stack time accumulator, CPU 3 is user stack time is reset, and the CPU 3 processor set type is changed to standard. Notice the sum user stack times have not decreased. Similar functionality may be used in multi-workload metering system. One such system is described in more detail in concurrently filed and commonly assigned U.S. Provisional Patent Application entitled "SYSTEM AND METHOD FOR SEPARATING MULTI-WORKLOAD PROCESSOR UTILIZATION ON A METERED COMPUTER SYSTEM," by Thompson et al., Attorney Docket No. TN471, filed 27 April 2006.

### CPU Seconds Scaling

With the advent of variable processor capacity managed technologies, it is possible for the amount of work that gets done by a second of CPU time to vary from one moment to the next. This is because dynamic changes as a result of a new key, new image, changes to the percentage of a key allocated to a partition, or even processor set changes can cause the Performance Level (PL) of the running CPUs to be increased or decreased. This ability to change CPU PL's dynamically means CPU seconds may no longer be equal, even though current interfaces and reporting mechanisms treat them as such.

CPU Seconds Scaling for P-bits builds upon the 'normalized' CPU time accounting by implementing 'normalized initial P-bit' and 'normalized other P-bit' times. There are now 3 'normalized' times that can be used in conjunction with back end process billing (for example, BILLINGSUPPORT).
Normalized process time
Normalized initial P-bit time
Normalized other P-bit time

Furthermore, changes in how a processor is throttled (i.e., IP emulation code) directly affect task processor time measurements that results in two distinct processor time accounting types for each of the three task processor time measurements (process time, initial P-bit time, other P-bit time). The two task processor time accounting types are: 'effective' processor time - represents the apparent amount of time that a task had control of the processor (includes 4 component of throttling). The effective processor time is user visible, and is displayed in the ?TI and the A operator commands. 'normalized' processor time - represents processor speed independent time accounting. This type of accounting is useful in back end billing applications. System interfaces and log entries will be modified to return both values so that customers will have choices to use the appropriate value for comparison purposes.

### Processor Failover Recovery

In multi-processor configurations, the operating system will remove from the partition processors that are unresponsive or are experiencing hardware failures. Loss of a processor can reduce both the performance of the system as well as its hardware redundancy. Processor failover recovery allows the operating system to replace a failed processor with another, previously unused processor in the system. With this implementation, processor failover recovery now takes into account the processor set of the failing processor. The operating system automatically assigns a replacement processor to the processor set that experienced the failure.

FIG. 10 illustrates a flowchart for an example method for implementing one embodiment of the present invention. The method provides automated configuration of processor sets for tasks from a plurality of workload types within a multi-processor computing system. The method begins 1001 and configures at least one processor set to operate as a standard processor set in operation 1011. Next, the method configures at least one processor set to operate as a processor set associated with one of the plurality of workload types in operation 1013 and assigns newly created tasks to one of the plurality of workload types using characteristics of the task in operation 1015. In operation 1017, the method assigns all child tasks spawned from an existing task to the workload type associated with the existing task and runs all tasks of each of the plurality of workload types on a processor set associated with the task's workload type when such a processor set exists within the computing system in operation 1018. The method runs all other tasks not running on a processor set associated with the task's workload type on the at least one standard processor set in operation 1019 before the processing ends 1002.

Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments necessarily mutually exclusive of other embodiments

The present invention can be embodied in the form of methods and apparatuses for practicing those methods. The present invention can also be embodied in the form of program code embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. The present invention can also be embodied in the form of program code, for example, whether stored in a storage medium, loaded into and/or executed by a machine, or transmitted over some transmission medium or carrier, such as over electrical wiring or cabling, through fiber optics, or via electromagnetic radiation, wherein, when the program code is loaded into and executed by a machine, such as a computer, the machine becomes an apparatus for practicing the invention. When implemented on a general-purpose processor, the program code segments combine with the processor to provide a unique device that operates analogously to specific logic circuits.

The present invention can also be embodied in the form of a bitstream or other sequence of signal values electrically or optically transmitted through a medium, stored magnetic-field variations in a magnetic recording medium, etc., generated using a method and/or an apparatus of the present invention.

Unless explicitly stated otherwise, each numerical value and range should be interpreted as being approximate as if the word "about" or "approximately" preceded the value of the value or range.

It will be further understood that various changes in the details, materials, and arrangements of the parts which have been described and illustrated in order to explain the nature of this invention may be made by those skilled in the art without departing from the scope of the invention as expressed in the following claims.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the steps in the following method claims, if any, are recited in a particular sequence with corresponding labeling, unless the claim recitations otherwise imply a particular sequence for implementing some or all of those steps, those steps are not necessarily intended to be limited to being implemented in that particular sequence.

## Claims

1. A method for providing automated configuration of processor sets for tasks from a plurality of workload types within a multi-processor computing system, the method comprising: configuring at least one processor set to operate as a standard processor set; configuring at least one processor set to operate as a processor set associated with one of the plurality of workload types; assigning newly created tasks to one of the plurality of workload types using characteristics of the task; assigning all child tasks spawned from an existing task to the workload type associated with the existing task; running all tasks of each of the plurality of workload types on a processor set associated with the task's workload type when such a processor set exists within the computing system; and running all other tasks not running on a processor set associated with the task's workload type on the at least one standard processor set.

2. The method according to claim 1, wherein the at least one processor set associated with one of the plurality of workload types corresponds to a Java processor set for use in executing Java tasks.

3. The method according to claim 2, wherein the configuring the standard processor set comprises:
setting a standard processing rate associated with the processors within the standard processor set;
and enabling the operation of processing resources associated with the standard processor set.

4. The method according to claim 3, wherein the processing resources associated with the standard processor set comprises a first block of memory having a first memory block size.

5. The method according to claim 4, wherein the configuring the Java processor set comprises:
setting a Java processing rate associated with the processors within the Java processor set; and
enabling the operation of processing resources associated with the java processor set.

6. The method according to claim 5, wherein the processing resources associated with the java processor set comprises a second block of memory having a second memory block size.

7. A computing system having automated configuration of processor sets for tasks from a plurality of workload types within a multi-processor computing system, the computing system comprises:
one or more standard processor set executing processing tasks associated with a standard workload type; one or more particular processor sets executing processing tasks associated with a particular workload type; and a server control module for configuring the standard processor sets, configuring the particular processor standard workload type and configuring the particular processor sets; and
assigning tasks to processor set based upon the workload type associated with newly created tasks.

8. The computing system according to claim 7, wherein the configuring the standard processor set comprises: setting a standard processing rate associated with the processors within the standard processor set; and enabling the operation of processing resources associated with the standard processor set.

9. The computing system according to claim 8, wherein the processing resources associated with the standard processor set comprises a first block of memory having a first memory block size.

10. The computing system according to claim 7, wherein the configuring the particular processor set comprises: setting a particular processing rate associated with the processors within the particular processor set; and enabling the operation of processing resources associated with the particular processor set.

11. The computing system according to claim 8, wherein the processing resources associated with the particular processor set comprises a second block of memory having a second memory block size.

12. The computing system according to claim 11, wherein the particular processor set corresponds to a Java processor set associated with a Java workload type.

13. The computing system according to claim 11, wherein the standard processing rate is different from the particular processing rate.

14. The computing system according to claim 11, wherein the first memory block size associated with the first block of memory is different from the second memory block size associated with the second block of memory.

## Patentansprüche

1. Ein Verfahren zur Bereitstellung einer automatisierten Konfiguration von Prozessorsätzen für Aufgaben aus einer Vielzahl von Auslastungsarten innerhalb eines Multiprozessor-Rechnersystems, wobei das Verfahren folgendes umfasst: Konfigurieren mindestens eines Prozessorsatzes, um als ein standardmäßiger Prozessorsatz zu arbeiten; Konfigurierten mindestens eines Prozessorsatzes, um als ein Prozessorsatz zu arbeiten, der mit einer aus der Vielzahl von Auslastungsarten assoziiert ist; Zuweisen von neu erstellten Aufgaben zu einer aus der Vielzahl von Auslastungsarten unter Verwendung von Charakteristika der Aufgabe; Zuweisen sämtlicher Kindaufgaben, die aus einer bestehenden Aufgabe erzeugt wurden, zu der Auslastungsart, die mit der bestehenden Aufgabe assoziiert ist; Durchführen sämtlicher Aufgaben von jeder aus der Vielzahl von Auslastungsarten auf einem Prozessorsatz, der mit der Auslastungsart der Aufgabe assoziiert ist, wenn ein solcher Prozessorsatz innerhalb des Rechnersystems vorhanden ist; und Durchführen sämtlicher anderer Aufgaben, die nicht auf einem Prozessorsatz durchgeführt werden, der mit der Auslastungsart der Aufgabe assoziiert ist, auf dem mindestens einen standardmäßigen Prozessorsatz.

2. Das Verfahren nach Anspruch 1, wobei der mindestens eine Prozessorsatz, der mit einer aus der Vielzahl von Auslastungsarten assoziiert ist, einem Java-Prozessorsatz zur Verwendung in ausführenden Java-Aufgaben entspricht.

3. Das Verfahren nach Anspruch 2, wobei das Konfigurieren des standardmäßigen Prozessorsatzes folgendes umfasst:
Setzen einer standardmäßigen Verarbeitungsrate, die mit den Prozessoren innerhalb des standardmäßigen Prozessorsatzes assoziiert ist; und Aktivieren des Betriebs von Verarbeitungsressourcen, die mit dem standardmäßigen Prozessorsatz assoziiert sind.

4. Das Verfahren nach Anspruch 3, wobei die Verarbeitungsressourcen, die mit dem standardmäßigen Prozessorsatz assoziiert sind, einen ersten Speicherblock mit einer ersten Speicherblockgröße umfassen.

5. Das Verfahren nach Anspruch 4, wobei das Konfigurieren des Java-Prozessorsatzes folgendes umfasst: Setzen einer Java-Verarbeitungsrate, die mit den Prozessoren innerhalb des Java-Prozessorsatzes assoziiert ist; und Aktivieren des Betriebs von Verarbeitungsressourcen, die mit dem Java-Prozessorsatz assoziiert sind.

6. Das Verfahren nach Anspruch 5, wobei die Verarbeitungsressourcen, die mit dem Java-Prozessorsatz assoziiert sind, einen zweiten Speicherblock mit einer zweiten Speicherblockgröße umfassen.

7. Ein Rechnersystem mit einer automatisierten Konfiguration von Prozessorsätzen für Aufgaben aus einer Vielzahl von Auslastungsarten innerhalb eines Multiprozessor-Rechnersystems, wobei das Rechnersystem folgendes umfasst: einen oder mehr als einen standardmäßigen Prozessorsatz, der Verarbeitungsaufgaben ausführt, die mit einer standardmäßigen Auslastungsart assoziiert sind; einen oder mehr als einen bestimmten Prozessorsatz, der Verarbeitungsaufgaben ausführt, die mit einer bestimmten Auslastungsart assoziiert sind; und ein serversteuerungsmodul zum Konfigurieren der standardmäßigen Prozessorsätze, Konfigurieren der standardmäßigen Auslastungsart des bestimmten Prozessors und Konfigurieren der bestimmten Prozessorsätze; und Zuweisen von Aufgaben zu einem Prozessorsatz auf der Basis der Auslastungsart, die mit den neu erstellten Aufgaben assoziiert ist.

8. Das Rechnersystem nach Anspruch 7, wobei das Konfigurieren des standardmäßigen Prozessorsatzes folgendes umfasst:
Setzen einer standardmäßige Verarbeitungsrate, die mit den Prozessoren innerhalb des standardmäßigen Prozessorsatzes assoziiert ist; und Aktivieren des Betriebs von Verarbeitungsressourcen, die mit dem standardmäßigen Prozessorsatz assoziiert sind.

9. Das Rechnersystem nach Anspruch 8, wobei die Verarbeitungsressourcen, die mit dem standardmäßigen Prozessorsatz assoziiert sind, einen ersten Speicherblock mit einer ersten Speicherblockgröße umfassen.

10. Das Rechnersystem nach Anspruch 7, wobei das Konfigurieren des bestimmten Prozessorsatzes folgendes umfasst: Setzen einer bestimmten Verarbeitungsrate, die mit den Prozessoren innerhalb des bestimmten Prozessorsatzes assoziiert ist; und Aktivierten des Betriebs von Verarbeitungsressourcen, die mit dem bestimmten Prozessorsatz assoziiert sind.

11. Das Rechnersystem nach Anspruch 8, wobei die Verarbeitungsressourcen, die mit dem bestimmten Prozessorsatz assoziiert sind, einen zweiten Speicherblock mit einer zweiten Speicherblockgröße umfassen.

12. Das Rechnersystem nach Anspruch 11, wobei der bestimmte Prozessorsatz einem Java-Prozessorsatz entspricht, der mit einer Java-Auslastungsart assoziiert ist.

13. Das Rechnersystem nach Anspruch 11, wobei sich die standardmäßige Verarbeitungsrate von der bestimmten Verarbeitungsrate unterscheidet.

14. Das Rechnersystem nach Anspruch 11, wobei sich die erste Speicherblockgröße, die mit dem ersten Speicherblock assoziiert ist, von der zweiten Speicherblockgröße, die mit dem zweiten Speicherblock assoziiert ist, unterscheidet.

## Revendications

1. Procédé pour fournir une configuration automatisée de jeux de processeurs pour des tâches parmi une pluralité de types de charge de travail dans un système informatique multiprocesseur, le procédé comprenant: la configuration d'au moins un jeu de processeurs pour fonctionner comme un jeu de processeurs standard ; la configuration d'au moins un jeu de processeurs pour fonctionner comme un jeu de processeurs associé à l'un de la pluralité de types de charges de travail ; l'affectation de tâches nouvellement créées à l'un de la pluralité de types de charges de travail en utilisant des caractéristiques de la tâche ; l'affectation de la totalité des charges enfant, engendrées à partir d'une tâche existante, au type de charge de travail associé à la tâche existante ; l'exécution de toutes les tâches de chacun de la pluralité des types de charge de travail sur un jeu de processeurs associé au type de charge de la tâche, lorsqu'un tel jeu de processeurs existe dans le système informatique : et exécution de toutes les autres tâches ne s'exécutant pas sur un jeu de processeurs associé au type de charge de la tâche, sur le au moins un jeu de processeurs standard.

2. Procédé selon la revendication 1, dans lequel le au moins un jeu de processeurs associé à l'un de la pluralité de types de charges de travail correspond à un jeu de processeurs Java, pour utilisation dans l'exécution de tâches Java.

3. Procédé selon la revendication 2, dans lequel la configuration du jeu de processeurs standard comprend : la fixation d'une cadence de traitement standard associée aux processeurs situés dans le jeu de processeurs standard ; et l'activation de l'exploitation des ressources de traitement associées au jeu de processeurs standard.

4. Procédé selon la revendication 3, dans lequel les ressources de traitement associées au jeu de processeurs standard comprennent un premier bloc de mémoire ayant une première taille de bloc de mémoire.

5. Procédé selon la revendication 4, dans lequel la configuration du jeu de processeurs Java comprend : la fixation d'une cadence de traitement Java associée aux processeurs situés dans le jeu de processeurs Java ; et l'activation de l'exploitation des ressources de traitement associées au jeu de processeurs Java.

6. Procédé selon la revendication 5, dans lequel les ressources de traitement associées au jeu de processeurs Java comprennent un deuxième bloc de mémoire ayant une deuxième taille de bloc de mémoire.

7. Système informatique ayant une configuration automatisée de jeux de processeurs pour des tâches parmi une pluralité de types de charge de travail dans un système informatique multiprocesseur, le système informatique comprenant : un ou plusieurs jeux de processeurs standard exécutant des tâches de traitement associées à un type de charge de travail standard ; un ou plusieurs jeux de processeurs particuliers exécutant des tâches de traitement associées à un type de charge de travail particulier ; et un module de commande de serveur, pour configurer les jeux de processeurs standard, configurer le processeur particulier pour le type de charge de travail standard, et configurer les jeux de processeurs particuliers ; et affecter des tâches au jeu de processeurs, d'après le type de charge de travail associé à des tâches nouvellement créées.

8. Système informatique selon la revendication 7, dans lequel la configuration du jeux de processeurs standard comprend : la fixation d'une cadence de traitement standard associée aux processeurs situés dans le jeu de processeurs standard ; et l'activation de l'exploitation des ressources de traitement associées au jeu de processeurs standard.

9. Système informatique selon la revendication 8, dans lequel les ressources de traitement associées au jeu de processeurs standard comprennent un premier bloc de mémoire ayant une première taille de bloc de mémoire.

10. Système informatique selon la revendication 7, dans lequel la configuration du jeu de processeurs particuliers comprend : la fixation d'une cadence de traitement particulière associée aux processeurs situés dans le jeu de processeurs particuliers; et l'activation de l'exploitation des ressources de traitement associées au jeu de processeurs particuliers.

11. Système informatique selon la revendication 8, dans lequel les ressources de traitement associées au jeu de processeurs particuliers comprennent un deuxième bloc de mémoire ayant une deuxième taille de bloc de mémoire.

12. Système informatique selon la revendication 11, dans lequel le jeu de processeurs particuliers correspond à un jeu de processeurs Java associé à un type de charge de travail Java.

13. Système informatique selon la revendication 11, dans lequel la cadence de traitement standard est différente de la cadence de traitement particulière.

14. Système informatique selon la revendication 11, dans lequel la première taille de bloc de mémoire associée au premier bloc de mémoire est différente de la deuxième taille de bloc de mémoire associée au deuxième bloc de mémoire.
